(19) Europäisches Patentamt
European Patent Office
Office européen des brevets

(11) EP 3 929 248 A1

# (12) EUROPEAN PATENT APPLICATION

(43) Date of publication:
**29.12.2021 Bulletin 2021/52**

(21) Application number: **20182663.3**

(22) Date of filing: **26.06.2020**

(51) Int Cl.:
***C08L 69/00*** *(2006.01)*
***C08K 5/5399*** *(2006.01)*
***C08K 5/541*** *(2006.01)*
***C08K 3/013*** *(2018.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SHPP Global Technologies B.V.**
**4612 PX Bergen op Zoom (NL)**

(72) Inventors:
- **YANG, Jianming**
  **Pudong New Area, Shanghai 201319 (CN)**
- **WANG, Jian**
  **Pudong New Area, Shanghai 201319 (CN)**
- **ZHENG, Yun**
  **Pudong New Area, Shanghai 201319 (CN)**

(74) Representative: **Dehns**
**St. Bride's House**
**10 Salisbury Square**
**London EC4Y 8JD (GB)**

## (54) POLYCARBONATE COMPOSITIONS WITH THIN WALL FLAME RETARDANT PROPERTIES AND SHAPED ARTICLE THEREFORE

(57) Disclosed herein are compositions comprising from about 26 wt. % to about 89 wt. % of a polycarbonate polymer component, from about 0.5 wt. % to about 20 wt. % of phosphazene-based flame retardant, from about 0.01 wt. % to about 4 wt. % of a siloxane component, and from about 10 wt. % to about 50 wt. % of a filler component, wherein all weight percent are based on the total weight of the composition. The composition may exhibit a notched Izod impact strength of at least 150 J/m when tested in accordance with ASTM D256 at 23 °C and 5lb/ft on a 3.2 mm bar specimen, a tensile elongation less than or equal to 2% when tested in accordance with D638 at 5 mm/min at break on a Type I bar specimen, and the composition achieves a p(FTP) of at least 0.85 for normal V0 of at 1.2 mm according to UL 94 (2019).

EP 3 929 248 A1

## Description

## FIELD OF THE DISCLOSURE

The present disclosure relates to polycarbonate compositions, more specifically high modulus polycarbonate compositions with thin wall flame retardant performance.

## BACKGROUND OF THE DISCLOSURE

High modulus ductile polymer materials are generally mineral filler or glass/carbon fiber reinforced polycarbonate (PC) w/wo FR performance. For the consumer electronics industry, halogen free flame retardants and thinner/lighter plastic parts are desirable. Part cosmetic issues may plague certain highly filled compositions. For example, glass fiber floating may be a problem, especially in high glass fiber (about 40 wt. % to 50 wt. % GF) applications. However, as the raw material, high flow ductile PC resin has inherently worse FR performance than regular flow PC due to the presence of aliphatic carbon co-monomer. Therefore, it's more difficult to develop thin wall HFD PC based composites with good surface and robust FR performance.

In order to satisfy thinner FR requirement on PC/HFD PC composite materials, the disclosed compositions achieve robust thin walled FR performance compared to conventional glass-filled polycarbonate products.

## SUMMARY

Aspects of the disclosure relate to a composition comprising from about 26 wt. % to about 89.5 wt. % of a polycarbonate polymer component; from about 0.5 wt. % to about 20 wt. % of phosphazene-based flame retardant; from about 0.01 wt. % to about 4 wt. % of a silicone additive; and from about 10 wt. % to about 50 wt. % of a filler component. The compositions may exhibit a notched Izod impact strength of at least 150 J/m when tested in accordance with ASTM D256 at 23 °C and 51b/ft on a 3.2 mm bar specimen, a tensile elongation less than or equal to 2% when tested in accordance with D638 at 5 mm/min at break on a Type I bar specimen, and achieves a p(FTP) of at least 0.85 for normal V0 of at 1.2 mm according to UL 94 (2019).

Aspects of the disclosure further relate to a method for forming the disclosed composition.

## DETAILED DESCRIPTION

The present disclosure can be understood more readily by reference to the following detailed description of the disclosure and the Examples included therein. As a raw material, HFD PC resin may have poorer FR performance than non-sebacic acid based PC due to the present of aliphatic carbon co-monomer. Accordingly, it is more difficult to develop thin wall HFD PC based composites with good surface & robust FR performance. The present disclosure provides high-flow ductile PC compositions that achieve robust thin wall FR performance compare to conventional GF filled polycarbonate products.

In various aspects, the present disclosure pertains to compositions including from about 26 wt. % to about 89 wt. % of a polycarbonate polymer, from about 0.5 wt. % to about 20 wt. % of a phosphazene-based flame retardant, from about 0.01 wt. % to about 4 wt. % of a siloxane component, and from about 10 wt. % to about 50 wt. % of a filler component. In some aspects the composition has a notched Izod impact strength of at least about 30 J/m, a through-plane thermal conductivity of at least about 0.4 watts per meter Kelvin (W/mK) and/or an in-plane thermal conductivity of at least about 1.0 W/mK.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

All publications mentioned herein are incorporated herein by reference to disclose and describe the methods

and/or materials in connection with which the publications are cited.

**Compositions**

Aspects of the disclosure relate to compositions including:

a. from about 20 wt. % to about 89 wt. % of a polycarbonate polymer;
b. from about 0.5 wt. % to about 20 wt. % of phosphazene-based flame retardant;
c. from about 0.01 wt. % to about 4 wt. % of a siloxane component; and
d. from about 10 wt. % to about 50 wt. % of a filler component.

In certain aspects, the composition may exhibit a notched Izod impact strength of at least 150 J/m when tested in accordance with ASTM D256 at 23 °C and 51b/ft on a 3.2 mm bar specimen. The composition may exhibit a tensile elongation less than or equal to 2% when tested in accordance with D638 at 5 mm/min at break on a Type I bar specimen. The composition may achieve a p(FTP) of at least 0.85 for normal $V_0$ of at 1.2 mm according to UL 94 (2019).

**Polycarbonate Polymer Component**

In some aspects the composition includes a polycarbonate polymer. As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates. The terms "residues" and "structural units", used in reference to the constituents of the polymers, are synonymous throughout the specification.

In certain aspects the polycarbonate polymer includes a bisphenol-A polycarbonate, a high molecular weight (Mw) high flow/ductile (HFD) polycarbonate, a low Mw HFD polycarbonate, or a combination thereof.

The terms "BisA," "BPA," or "bisphenol A," which can be used interchangeably, as used herein refers to a compound having a structure represented by the formula:

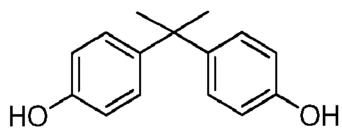

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

In some aspects the high flow/ductile polycarbonate is a polycarbonate that provides very high flow (e.g., about 40% greater than conventional polycarbonate), while maintaining the toughness and ductility for flowability that is typical in conventional polycarbonate. Exemplary high flow/ductile polycarbonates suitable for use in aspects of the present disclosure include the LEXAN™ HFD resin line of polycarbonates, available from SABIC. For a given melt flow, LEXAN™ HFD resin has about a 10-15 °C lower ductile/brittle transition temperature than conventional PC. In addition, LEXAN™ HFD resin exhibits high ductility at temperatures down to about -40 °F, and it processes at temperatures about 20 °F lower than conventional PC having the same ductility.

An exemplary bisphenol-A polycarbonate suitable for use in aspects of the disclosure includes, but is not limited to, a PC Copolymer (various grades of which are available from SABIC), which includes repeating units derived from BPA and repeating units derived from sebacic acid. In a further aspect, the polycarbonate polymer could be a Bisphenol-A polycarbonate homopolymer, or a blend of the PC Copolymer and the Bisphenol-A polycarbonate homopolymer. The mechanism for the sebacic acid-based may proceed as shown below.

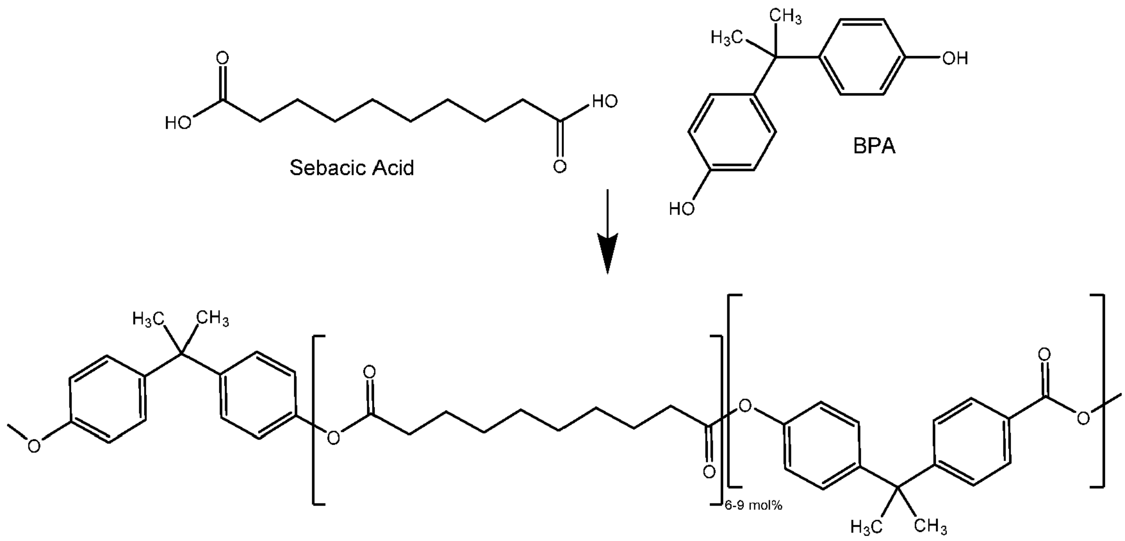

Sebacic Acid

BPA

Copolymer of Sebacic Acid and BPA (HFD)

The sebacic acid based PC may provide improved flow and ductility as well as lower processing times while the BPA provides desirable heat performance and modulus properties to provide a copolymer of sebacic acid and BPA. An example of the sebacic acid PC may comprise LEXAN™ HFD resin available from SABIC.

Moreover, in various further aspects, the sebacic acid-BPA copolymer may react synergistically with the disclosed silicone and phosphazene FR compound to yet further improve flame and mechanical performance.

As used herein, "high molecular weight" refers to a molecular weight (Mw) of about 58,000 to about 75,000 grams/mole. As used herein, "low molecular weight" refers to a Mw of about 15,000 to about 58,000 grams/mole, as measured by gel permeation chromatography using BPA polycarbonate standards.

In yet further examples, a polycarbonate copolymer may comprise a polycarbonate-polysiloxane copolymer. Non-limiting examples of polycarbonate-polysiloxane copolymers may comprise various copolymers available from SABIC™. In an aspect, the polysiloxane-polycarbonate copolymer can contain 6 % by weight polysiloxane content based upon the total weight of the polysiloxane-polycarbonate copolymer. In various aspects, the 6 % by weight polysiloxane block copolymer can have a weight average molecular weight (Mw) of from about 23,000 to 24,000 Daltons using gel permeation chromatography with a bisphenol A polycarbonate absolute molecular weight standard. In certain aspects, the 6% weight siloxane polysiloxane-polycarbonate copolymer can have a melt volume flow rate (MVR) of about 10 cubic centimeters per 10 minutes ($cm^3$/ 10 min) at 300 °C /1.2 kilogram (kg) (see for example, C9030T, a 6 % by weight polysiloxane content copolymer available from SABIC as "transparent" EXL C9030T resin polymer).

In another example, the polysiloxane-polycarbonate block can comprise 20 % by weight polysiloxane based upon the total weight of the polysiloxane block copolymer. For example, an appropriate polysiloxane-polycarbonate copolymer can be a bisphenol A polysiloxane-polycarbonate copolymer endcapped with para-cumyl phenol (PCP) and having a 20 % polysiloxane content (see C9030P, commercially available from SABIC as the "opaque" EXL C9030P). In various aspects, the weight average molecular weight of the 20 % polysiloxane block copolymer can be about 29,900 Daltons to about 31,000 Daltons when tested according to a polycarbonate standard using gel permeation chromatography (GPC) on a crosslinked styrene-divinylbenzene column and calibrated to polycarbonate references using a UV-VIS detector set at 264 nanometers (nm) on 1 milligram per milliliter (mg/ml) samples eluted at a flow rate of about 1.0 ml/minute. Moreover, the 20% polysiloxane block copolymer can have an MVR at 300 °C/1.2 kg of 7 $cm^3$/ 10 min and can exhibit siloxane domains sized in a range of from about 5 micrometers to about 20 micrometers (microns, $\mu$m).

In a further aspect, the polycarbonate polymer component may comprise a combination of polycarbonate polymers. For example, the polycarbonate polymer component may comprise one or more HFD-PC polymers and a polycarbonate copolymer, such as for example, a polycarbonate polysiloxane copolymer. A first HFD-PC polycarbonate polymer may be present in an amount from about 5 wt% to about 30 wt% based on the total weight of the composition. In a still further aspect, a second HFD-PC polycarbonate polymer may be present in an amount from about 5 wt. % to about 20 wt. % based on the total weight of the composition. In a yet further aspect, a polycarbonate copolymer such as a polycarbonate polysiloxane copolymer may be present in an amount from about 5 wt% to about 30 wt% based on the total weight of the composition.

## Flame Retardant

As noted above, it can be challenging to achieve a desired flame retardancy without adversely affecting the desirable physical properties of the compositions, such as, for example, maintaining molecular weight. In various aspects, the inventive compositions and methods disclosed herein can provide a desirable flame retardancy while maintaining physical properties of the composition. The blended polycarbonate composition of the present disclosure can comprise an optional flame retardant additive. In one aspect, the flame retardant additive can comprise an organic compound containing phosphorus, such as, for example, an organophosphorus compound. In still another aspect, the flame retardant comprises an organophosphorus compound comprising an aliphatic metal phosphinate. In yet another aspect, the flame retardant comprises a phenoxyphosphazene (PPZ).

In one aspect, the flame retardant (FR) additive comprises a halogen. In yet another aspect, the flame retardant additive is free of or substantially free of any halogen such as bromine and/or chlorine. In still another aspect, at least a portion of the flame retardant additive is free of or substantially free of bromine and/or chlorine. In another aspect, the flame retardant additive comprises phosphorus such as phosphate (BPADP, RDP, Sol-DP), phosphine oxide (TPPO), phosphonate (FRX-100), phosphinate (DOPO), and phosphazene. In still other aspects, the phosphorus-containing FR is the primary FR. And in another aspect, the FR additive is PTFE-based, optionally provided with a phosphorus-containing FR. It is understood however that in facilities that process multiple products a certain amount of cross contamination can occur resulting in bromine and/or chlorine levels typically on the parts per million by weight scale. With this understanding it can be readily appreciated that essentially free of bromine and chlorine can be defined as having a bromine and/or chlorine content of less than or equal to about 100 parts per million by weight (ppm), less than or equal to about 75 ppm, or less than or equal to about 50 ppm. When this definition is applied to the fire retardant it is based on the total weight of the fire retardant. When this definition is applied to the thermoplastic composition it is based on the total weight of the composition, excluding any filler.

In one aspect, the flame retardant additive or a portion thereof comprises an organic phosphate and/or an organic compound containing a phosphorus-nitrogen bond. In one aspect, exemplary flame retardant compounds containing phosphorus-nitrogen bonds include phosphonitrilic chloride, phosphorus ester amides, phosphoric acid amides, phosphonic acid amides, phosphinic acid amides, tris(aziridinyl)phosphine oxide.

A suitable organic phosphate is an aromatic phosphate of the formula $(GO)_3P=O$, wherein each G is independently an alkyl, cycloalkyl, aryl, alkylaryl, or aralkyl group, provided that at least one G is an aromatic group. Two of the G groups can be joined together to provide a cyclic group, for example, diphenyl pentaerythritol diphosphate. Exemplary aromatic phosphates include, phenyl bis(dodecyl)phosphate, phenyl bis(neopentyl)phosphate, phenyl bis(3,5,5'-trimethylhexyl)phosphate, ethyl diphenyl phosphate, 2-ethylhexyl di(p-tolyl)phosphate, bis(2-ethylhexyl)p-tolyl phosphate, tritolyl phosphate, bis(2-ethylhexyl)phenyl phosphate, tri(nonylphenyl)phosphate, bis(dodecyl)p-tolyl phosphate, dibutyl phenyl phosphate, 2-chloroethyl diphenyl phosphate, p-tolyl bis(2,5,5'-trimethylhexyl)phosphate, 2-ethylhexyl diphenyl phosphate, or the like. In one aspect, the flame retardant of the present disclosure comprises BPADP. In still other aspects, the flame retardant can comprise a mixture of two or more individual flame retardant compositions.

In some aspects, the flame retardants can be present in ranges bounded at the lower end by a value of 0, about 0.1 wt%, about 2 wt%, about 4 wt%, about 6 wt%, about 8 wt%, or about 10 wt%, and bounded at the upper end by a value of about 25 wt%, about 20 wt%, about 15 wt%, about 10 wt%, about 8 wt%, or about 6 wt%, relative to the total weight of the composition. For example, the phenoxyphosphazene flame retardant additive may be present in an amount from about 0.5 wt. % to about 20 wt. % relative to the total weight of the composition.

In various aspects, where present, the flame retardant, including the phosphorus-containing flame retardant of the present disclosure may be present in amounts of from about 10 wt% to about 25 wt% of the total composition, or from about 10 wt% to about 15 wt%. As a further example, the composition may comprise from about 0.5 wt. % to about 20 wt. % of a phosphazene-based flame retardant. In some examples, the composition may comprise from about 0.5 wt. % to about 20 wt. %, from about 0.5 wt. % to about 15 wt. %, from about 0.5 wt. % to about 12 wt. %, from about 3 wt. % to about 15 wt. %, from about 1 wt. % to about 10 wt. %, from about 1 wt. % to about 12 wt. %, or from about 3 wt. % to about 10 wt. % of a phenoxyphosphazene.

## Siloxane component

The disclosed thermoplastic compositions further comprise a siloxane component. More specifically, the siloxane component may comprise at least one oligomeric siloxane additive and at least one silicone resin. The siloxane component may provide a synergistic affect among the polymer resin and phosphazene based FR synergist.

The siloxane additive can be polymeric or oligomeric in nature or, alternatively, can be monomeric or a single compound. The at least one filler composition comprises at least one siloxane additive. The at least one siloxane additive may, for example, comprise functional groups selected from amino groups, phenyl groups, and epoxy groups. Non-limiting examples of siloxane additives may include epoxysilane, aminosilane, aminosiloxane, or phenylsiloxane. In one

aspect, the siloxane additive comprises an aminosiloxane. In another aspect, the siloxane additive comprises a phenyl siloxane.

Representative siloxane oligomers may, but not necessarily exhibit, viscosities in a range of from about 20 cSt to about 80 cSt, preferably from about 25 to about 60 cSt at a temperature in the range of 20 mq°C to 25°C. Representative viscosities are shown in the Examples.

The siloxane additive can be an aminosiloxane such as an amodimethicone silsequioxane or a mixture comprising an amodimethicone silsequioxane. As used herein, "amodimethicone" refers to amine-functionalized silicone. For example, polydimethylsiloxane (dimethicone, by INCI naming standards), consists of methyl groups ($-CH_3$) as the pendant group along the backbone of the polymer chain. Amine-functionalized silicones have been chemically modified so that some of the pendant groups along the backbone have been replaced with various alkylamine groups ($-alkyl-NH_2$). In various aspects, the aminosiloxane can comprise about 60 wt % to about 90 wt % of a mixture of siloxanes and silicones, including dimethyl polymers with methyl silsequioxanes and about 10 wt % to about 30 wt % aminofunctional oligosiloxane. One suitable aminosiloxane mixture comprising an amodimethicone silsequioxane is SF-1706, which is commercially available from Momentive Performance Materials, USA. Another suitable aminosiloxane is a 25/75 mixture of methoxy terminated aminoethylaminopropyl polysiloxane and methoxy terminated siloxane resin.

In one aspect, the aminosiloxane can comprise one or more oligomeric or polymeric siloxane compounds having a structure represented by the formula:

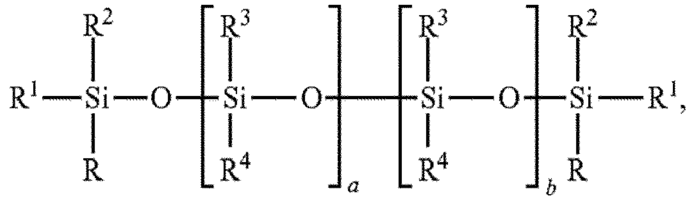

wherein each occurrence of R and $R^2$ is a substituted or unsubstituted group independently selected from alkyl, aryl, olefinic (vinyl), and $-OR^5$; wherein each occurrence of $R^1$ is independently selected from a substituted or unsubstituted group selected from alkyl, aryl, olefinic (vinyl), $--OR^4$, and a diamino group containing the radical $-F^1-NR^6--F-NH_2$, with the proviso that at least one $R^1$ group is a diamino containing radical; wherein $F^1$1 is a linear or branched alkylene of 1-12 carbon atoms; F is linear or branched alkylene of 2-10 carbon atoms; wherein each occurrence of $R^3$ and $R^4$ is independently selected from substituted or unsubstituted alkyl, aryl, capped or uncapped polyoxyalkylene, alkaryl, aralkylene or alkenyl; wherein each occurrence of $R^5$ is independently hydrogen or alkyl; wherein each occurrence of $R^6$ is independently hydrogen or lower alkyl; wherein a is an integer from 0 to 10,000; and wherein b is an integer from 10 to 1000, with the proviso that a and b are present in a ratio of a:b of at least 1:1 to 200:1.

In independent aspects, at least one of the oligomeric siloxane additives comprises a polymethyl-polysiloxane, a polyphenyl-polysiloxane, or a combination thereof. In some aspects, at least one of the oligomeric siloxane additives comprises a polymethyl-polyphenyl-polysiloxane having a plurality of dimethyl siloxyl or diphenyl siloxyl repeating units. At least one of the oligomeric siloxane additives can be a hydroxy terminated silicone fluid. In other aspects, at least one of the oligomeric siloxane additives is terminated by trimethyl silyl groups. In various aspects, the aminosiloxane can be a mixture comprising a compound having a structure represented by the formula:

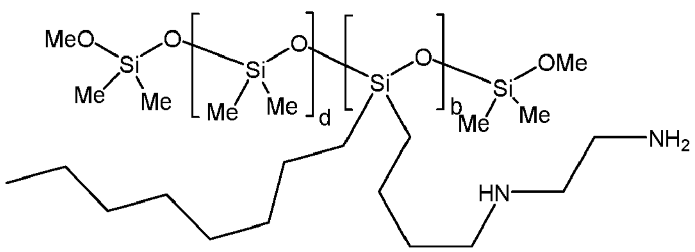

The aminosiloxane can also be a curable amine functional silicone such as the commercially available curable amine functional silicones Dow Corning Silicone 531 and 536, and SWS Silicones Corp. SWS E-210. Other suitable curable amino functional silicones are also sold by Wacker, Siltech Corporation, and others. The terms "amine functional silicone," "aminosiloxane," and "aminoalkylsiloxane" are synonymous and are used interchangeably in the literature. The term "amine" as used herein means any suitable amine, and particularly cycloamine, polyamine and alkylamine, which include the curable alkylmonoamine, alkyldiamine and alkyltriamine functional silicones. The aminosiloxane can also be a curable amine functional silicone such as the commercially available curable amine functional silicones Dow

Corning Silicone 531 and 536, and SWS Silicones Corp. SWS E-210. Other suitable curable amino functional silicones are also sold by Wacker, Siltech Corporation, and others. The terms "amine functional silicone," "aminosiloxane," and "aminoalkylsiloxane" are synonymous and are used interchangeably in the literature. The term "amine" as used herein means any suitable amine, and particularly cycloamine, polyamine and alkylamine, which include the curable alkylmonoamine, alkyldiamine and alkyltriamine functional silicones.

In some aspects, the at least one oligomeric siloxane additive may comprise dimethyl siloxane. Dimethyl siloxane may be represented by the structure:

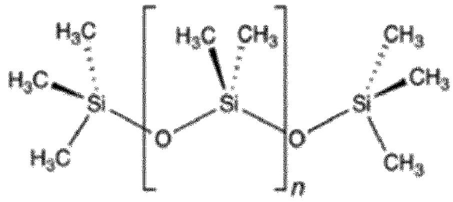

where n is an integer from 0 to 10,000.

The at least one silicone resin may comprise an MQ resin. An MQ resin may be represented by the structure

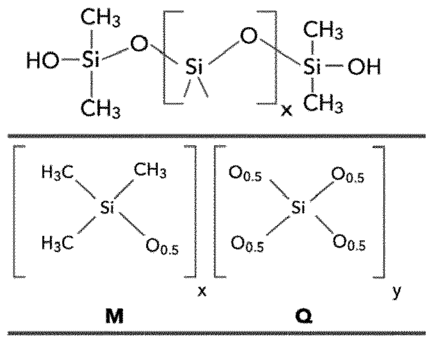

where x and y are integers.

As a specific example, the siloxane component may comprise an MQ resin dissolved in dimethyl polysiloxane. The siloxane component may comprise from about 50 -70 % (or from about 60 - 90%) dimethyl siloxane and from about 30-50 % (or from about 30 - 60%) MQ resin based on the total content of the siloxane component. An example of a commercially available siloxane component may comprise SFR-100 as shown below.

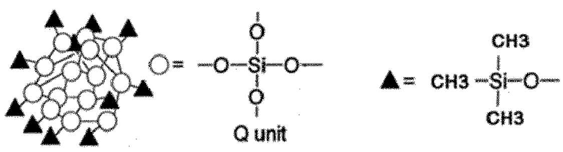

SFR100

In further aspects, the siloxane component can comprise a commercially available silicone such as SFR-100 or SF1023 (Momentive Performance Materials) or EC4952 silicone (Emerson Cummings Co., USA). SFR-100 silicone is characterized as a silanol- or trimethylsilyl-terminated polymethylsiloxane and is a liquid blend comprising about 60-80 weight percent of a difunctional polydimethylsiloxane having a number-average molecular weight of about 150,000, and 20-40 wt percent of a polytrimethylsilyl silicate resin having monofunctional (i.e. trimethylsiloxane) and tetrafunctional (i.e. $SiO2$) repeating units in an average ratio of between about 0.8 and 1 to 1 and having a number-average molecular weight of about 2,200. In some aspects, the siloxane component is added directly during the extrusion process along with the polycarbonate polymer, the phosphazene FR agent, the filler, and any additional ingredients. In some aspects, the siloxane component comprising at least one oligomeric siloxane additive and at least one silicone resin is present in an amount in a range having a lower boundary of about 0.01, 0.1, 0.2, 0.3, 0.4, 0.5, 0.6, 0.7, 0.8, 0.9, 1. 1.1, 1.2, 1.3, 1.4, 1.5, 2, 3, or 4 wt% and having an upper boundary of about 10, 9, 8, 7, 6, or 5 wt%. Any combination of these values may define ranges considered within the scope of this disclosure (for example, the siloxane component may comprise from about 0.01 wt.% to about to about 4 wt.%, or from about 0.01 wt. % to about 6 wt. %, or from about 0.01 wt.% to about 3 wt. %.) .

## Reinforcing Filler

The blended polycarbonate composition further comprises one or more fillers. The filler can be selected to impart additional impact strength and/or provide additional characteristics that can be based on the final selected characteristics of the polymer composition. The specific composition of a filler can vary, provided that the filler is chemically compatible with the remaining components of the polymer composition. In some aspects, the filler(s) comprise inorganic materials.

In another aspect, the filler comprises, for example, clay; $TiO_2$; fibers comprising asbestos or the like fibers; silicates and silica powders, aluminum silicate (mullite), synthetic calcium silicate, zirconium silicate, fused silica, crystalline silica graphite, natural silica sand, or the like; boron powders, boron-nitride powder, boron-silicate powders, or the like; alumina; magnesium oxide (magnesia); calcium sulfate (as its anhydride, dihydrate or trihydrate); calcium carbonates, chalk, limestone, marble, synthetic precipitated calcium carbonates, or the like; talc, including but not limited to fibrous, modular, needle shaped, lamellar talc, or the like; wollastonite; surface-treated wollastonite; glass spheres including but not limited to hollow and solid glass spheres, silicate spheres, cenospheres, aluminosilicate (armospheres),or the like; kaolin, including but not limited to hard kaolin, soft kaolin, calcined kaolin, kaolin including various coatings known in the art to facilitate compatibility with the polymeric matrix resin, or the like; single crystal fibers or "whiskers" including but not limited to silicon carbide, alumina, boron carbide, iron, nickel, copper, or the like; glass fibers, (including continuous and chopped fibers), including but not limited to E, A, C, ECR, R, S, D, and NE glasses and quartz, or the like; sulfides including but not limited to molybdenum sulfide, zinc sulfide or the like; barium compounds including but not limited to barium titanate, barium ferrite, barium sulfate, heavy spar, or the like; metals and metal oxides including but not limited to particulate or fibrous aluminum, bronze, zinc, copper and nickel or the like; flaked fillers including but not limited to as glass flakes, flaked silicon carbide, aluminum diboride, aluminum flakes, steel flakes or the like; fibrous fillers, for example short inorganic fibers including but not limited to those derived from blends including at least one of aluminum silicates, aluminum oxides, magnesium oxides, and calcium sulfate hemihydrate or the like; natural fillers and reinforcements, including but not limited to wood flour obtained by pulverizing wood, fibrous products such as cellulose, cotton, sisal, jute, starch, cork flour, lignin, ground nut shells, corn, rice grain husks or the like; reinforcing organic fibrous fillers formed from organic polymers capable of forming fibers including but not limited to poly(ether ketone), polyimide, polybenzoxazole, poly(phenylene sulfide), polyesters, polyethylene, aromatic polyamides, aromatic polyimides, polyetherimides, polytetrafluoroethylene, acrylic resins, poly(vinyl alcohol) or the like; as well as additional fillers and reinforcing agents including but not limited to mica, clay, feldspar, flue dust, fillite, quartz, quartzite, perlite, tripoli, diatomaceous earth, carbon black, or the like, or combinations including at least one of the foregoing fillers or reinforcing agents.

In one aspect, the filler comprises an inorganic filler. In one aspect, the disclosed wear resistant polymer composition further comprises an inorganic filler comprising a carbon fiber, carbon black, glass fiber, aramid fiber, talc, clay or a combination thereof.

In a yet further aspect, the inorganic filler comprises a glass fiber, wherein the glass fiber has a cross section that can be round or flat. In another aspect, the glass fiber, for example, can be Nittobo (flat) glass fiber, CSG3PA820. In an even further aspect, the glass bead has a cross section that is round or flat.

The inorganic filler can be present in the polymer composition in an amount in the range of from about 2 wt. % to 50 wt. %, from about 5 wt. % to about 45 wt. %, from about 20 wt. % to about 50 wt. %, or from about 15 wt. % to about 45 wt. %, 10 wt. % to about 50 wt. % filler. In an aspect, the composition comprises from about 10 wt. % to 50 wt. % glass fiber.

## Additional additives

Some aspects of the compositions according to the present disclosure include from greater than 0 wt. % to about 50 wt. % of one or more additional additives, with the proviso that the additives are selected so as to not significantly adversely affect the desired properties of the composition. The additional additives are optional in the compositions, and may or may not be included therein. Combinations of additives can be used. Such additives can be mixed at a suitable time during the mixing of the components for forming the composition. Exemplary and non-limiting examples of additive materials that can be present in the disclosed compositions include one or more of a reinforcing filler, enhancer, acid scavenger, anti-drip agent, antioxidant, antistatic agent, chain extender, colorant (e.g., pigment and/or dye), de-molding agent, flow promoter, flow modifier, lubricant, mold release agent, plasticizer, quenching agent, flame retardant (including for example a thermal stabilizer, a hydrolytic stabilizer, or a light stabilizer), UV absorbing additive, UV reflecting additive and UV stabilizer.

In a particular aspect, the disclosed compositions can include an antioxidant or "stabilizer." Numerous stabilizers are known may be used, in one aspect the stabilizer is a hindered phenol, such as Irganox™ 1076, available from Ciba Specialty Chemicals (China) Ltd.

More specific examples of suitable impact modifiers for use in aspects of the present disclosure include, but

are not limited to: chain-branched molecular-structured polycarbonate (examples of which include but are not limited to 1.1.1-tris-(p-hydroxyphenyl)ethan (THPE) branched polycarbonate and 4-hydroxybenzonitrile (HBN) endcapped polycarbonate (CFR)); ethylene-propylene (EP) rubber (e.g., EPM rubber, EPDM rubber, and maleic anhydride grafted EP copolymer); acrylic rubber; methylmethacrylate-butadiene-styrene terpolymer (MBS); ethylene-co-glycidyl methacrylate (EGMA); ethylene-methyl acrylate with glycidyl methacrylate (EMAGMA); styrene-butadiene-styrene (SBS); styrene-ethylene/1-butene-styrene (SEBS); and combinations thereof.

In certain aspects the impact modifier may be present the composition in an amount of from about 0.5 wt. % to about 30 wt. %. In other aspects the impact modifier may be present the composition in an amount of from about 1 wt. % to about 25 wt. %, or from about 2 wt. % to about 20 wt. %, or from about 5 wt. % to about 10 wt. %.

In some aspects, the one or more additional additives may be present in an amount from greater than 0 wt. % to about 50 wt. %. In further aspects, the one or more additional additives is present in an amount from about 0.01 wt. % to about 20 wt. %, or from about 0.01 wt. % to about 15 wt. %, or from about 0.01 wt. % to about 10 wt. %, or from about 0.01 wt. % to about 5 wt. %, or from about 0.01 wt. % to about 2 wt. %, or even from about 0.5 wt. % to about 1.5 wt. %.

## Properties

The present disclosure provides a glass fiber reinforced flame retardant HFD PC based composition comprising polysiloxane copolymer, a siloxane component comprising CFR resin and Phenoxyphosphazene (PPZ) FR.

Given the properties described herein, the compositions may be particularly useful for high E-modulus thin wall housing such as for electronic articles (for example laptop, tablet housing, mobile phone housings or frames). HFD-PC based compositions may be more desirable than conventional PC based materials as HFD-PC materials may offer improved surface quality, especially with higher glass fiber applications (for example, 40 wt. % - 50 wt. % GF).

As provided herein, the disclosed compositions relate to thin walled articles comprising the disclosed composition. In this regard, a thin wall is a section of a product that is more narrow when compared to its length and width. As disclosed herein, a thin wall can have a nominal thickness of less than about 3 mm. The thin walled article can be processed for use in an array of fields, for example, as a housing for a consumer electronic device. In a further aspect, the present disclosure pertains to methods of preparing thin walled, moldable conductive thermoplastic compositions.

The claimed composition achieves a robust thin wall FR performance for HPD-PC based composites. Specifically, the compositions when tested in accordance with UL 94, may achieve a p(FTP) of at least 0.85 for normal V0 of at least 1.2 mm.

The compositions according to some aspects of the disclosure may also maintain their impact properties as compared to reference BPA polycarbonate compositions in the absence of the siloxane component described herein. Specifically, the compositions, when tested in accordance with ASTM D256, have a notched Izod impact strength of at least about 150 Joule per meter (J/m) at 23 °C and 51b/ft on a 3.2 mm bar specimen. The claimed compositions may exhibit high impact which may refer to a notched Izod impact strength of at least about 150 J/m at 23 °C and 51b/ft on a 3.2 mm bar specimen and a high modulus which may refer to a tensile modulus greater than 12,440 MPa when tested according to ASTM D 638. In further aspects the compositions, when tested in accordance with ASTM D638 at 5 mm/min break on a Type I bar specimen, exhibit a tensile elongation less than or equal to 2%. In certain aspects, the compositions according to aspects of the disclosure have some combination of the properties listed above.

## METHODS OF MANUFACTURE

The one or any foregoing components described herein may first be dry blended together, then fed into an extruder from one or multi-feeders, or separately fed into extruder from one or multi-feeders. The one or any foregoing components may be first dry blended with each other, or dry blended with any combination of foregoing components, then fed into an extruder from one or multi-feeders, or separately fed into an extruder from one or multi-feeders. The fillers used in the invention may also be first processed into a masterbatch, then fed into an extruder. The components may be fed into the extruder from a throat hopper or any side feeders.

The extruders used in the invention may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations comprising at least one of the foregoing.

The components may also be mixed together and then melt-blended to form the compositions. The melt blending of the components involves the use of shear force, extensional force, compressive force, ultrasonic energy, electromagnetic energy, thermal energy or combinations comprising at least one of the foregoing forces or forms of energy.

The barrel temperature on the extruder during compounding can be set at the temperature where at least a portion of the polycarbonate has reached a temperature greater than or equal to about the melting temperature, if the resin is a semi-crystalline organic polymer, or the flow point (e.g., the glass transition temperature) if the resin is an

amorphous resin.

The mixture including the foregoing mentioned components may be subject to multiple blending and forming steps if desirable. For example, the moldable composition may first be extruded and formed into pellets. The pellets may then be fed into a molding machine where it may be formed into any desirable shape or product. Alternatively, the moldable composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive degradation of the components (e.g., the polycarbonate material/resin). In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into small pellets for packaging and further handling.

**Articles of Manufacture**

In certain aspects, the present disclosure pertains to shaped, formed, or molded articles comprising the disclosed compositions. The compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded.

Various combinations of elements of this disclosure are encompassed by this disclosure, e.g., combinations of elements from dependent claims that depend upon the same independent claim.

**Aspects of the Disclosure**

In various aspects, the present disclosure pertains to and includes at least the following aspects.

Aspect 1. A composition comprising: from about 26 wt. % to about 89 wt. % of a polycarbonate polymer component; from about 0.5 wt. % to about 20 wt. % of phosphazene-based flame retardant; from about 0.01 wt. % to about 4 wt. % of a siloxane component; and from about 10 wt. % to about 50 wt. % of a filler component, wherein the composition exhibits a notched Izod impact strength of at least 150 J/m when tested in accordance with ASTM D256 at 23 °C and 51b/ft on a 3.2 mm bar specimen, wherein the composition exhibits a tensile elongation less than or equal to 2% when tested in accordance with D638 at 5 mm/min at break on a Type I bar specimen, wherein the composition achieves a p(FTP) of at least 0.85 for normal $V_0$ of at 1.2 mm according to UL 94 (2019), and wherein all weight percent are based on the total weight of the composition.

Aspect 2. The composition of aspect 1, wherein a molded part comprising the composition exhibits less variation in surface appearance by visual inspection than a comparative reference composition that does not include the siloxane component.

Aspect 3. The composition according to any one of aspects 1-2, wherein the phosphazene-based flame retardant comprises a phenoxyphosphazene.

Aspect 4. The composition according to any one of aspects 1-3, wherein the polycarbonate polymer component comprises a polycarbonate copolymer including repeating units derived from Bisphenol-A and repeating units derived from sebacic acid, a Bisphenol-A polycarbonate homopolymer, a polycarbonate polysiloxane copolymer, or a combination thereof.

Aspect 5. The composition according to any one of aspects 1 to 4, wherein the polycarbonate polymer component comprises a polycarbonate polysiloxane copolymer.

Aspect 6. The composition according to any one of aspects 1 to 4, wherein the polycarbonate polymer component comprises a polycarbonate polysiloxane copolymer present in an amount from about 5 wt. % to about 30 wt. % based on the total weight of the composition.

Aspect 7. The composition according to any one of aspects 1 to 6, wherein the filler component comprises a glass fiber, glass spheres, or a combination thereof.

Aspect 8. The composition according to any one of aspects 1 to 6, wherein the filler component comprises glass fiber.

Aspect 9. The composition according to any one of aspects 1-8, wherein the siloxane component an oligomeric siloxane additive.

Aspect 10. The composition according to any one of aspects 1-8, wherein the siloxane component comprises a MQ

silicone resin.

Aspect 11. The composition according to any one of claims 1-8, wherein the siloxane component comprises an MQ silicone resin and dimethyl siloxane.

Aspect 12. A composition comprising: from about 20 wt. % to about 80 wt. % of a polycarbonate polymer component; from about 0.5 wt. % to about 30 wt. % of phosphazene-based flame retardant; from about 0.01 wt. % to about 8 wt. % of an siloxane component; and from about 10 wt. % to about 50 wt. % of a filler component, wherein the composition exhibits high modulus, thin wall FR, high impact properties, and wherein all weight percent are based on the total weight of the composition.

Aspect 13. An article formed from the composition of any of aspects 1-12.

Aspect 14. A method for forming a composition, the method comprising: forming a mixture comprising from about 20 wt. % to about 80 wt. % of a polycarbonate polymer, from about 20 wt. % to about 80 wt. % of a polycarbonate polymer component, from about 0.5 wt. % to about 30 wt. % of phosphazene-based flame retardant, from about 0.01 wt. % to about 5 wt. % of a siloxane component, and from about 10 wt. % to about 50 wt. % of a filler; and injection molding or extruding the mixture to form the composition, wherein the composition exhibits a notched Izod impact strength of at least 150 J/m when tested in accordance with ASTM D256 at 23 °C and 51b/ft on a 3.2 mm bar specimen, wherein the composition exhibits a tensile elongation less than or equal to 2% when tested in accordance with D638 at 5 mm/min at break on a Type I bar specimen, and wherein the composition achieves a p(FTP) of at least 0.85 for normal V0 of at 1.2 mm according to UL 94 (2019).

Aspect 15. The method according to aspect 14, wherein the polycarbonate a polycarbonate copolymer including repeating units derived from Bisphenol-A and repeating units derived from sebacic acid; a Bisphenol-A polycarbonate homopolymer; or a combination thereof.

Aspect 16. The method according to any one of aspects 14-15, wherein the filler component comprises glass fiber.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt. %.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

### Raw Materials

The compositions in the Examples below were prepared from the components described in **Table 1**. The performance of the blended polycarbonate and/or polyester composition was tested with and without the addition of a polymer compatibilizer as described below:

**Table 1**

| Component | Chemical Description | Supplier |
|---|---|---|
| C914089 | ML7683-111N (HFD low Mw, about 42,000 Daltons); Sebacic Acid/Bisphenol A/Para-cumyl Phenol Polyester carbonate | SABIC |
| C914090 | ML7684-111N (HFD high Mw, about 70,000 Daltons) | SABIC |
| C9030P | 20% PC/siloxane copolymer (EXL); 20% PC/SILOXANE COPOLYMER, para-cumylphenol (PCP) ENDCAPPED; poly(bisphenol A carbonate)-polydimethylsiloxane block copolymer | SABIC |
| C893696 | ML7697 CFR polycarbonate copolymer; Branched THPE, HBN Endcapped PC; Branched polycarbonate-branched with THPE; endcap with p-cyanophenol | SABIC |
| G514119 | E-glass fiber, 'flat' cross section | Nittobo |

(continued)

| Component | Chemical Description | Supplier |
|---|---|---|
| F405879 | Phenoxyphosphazene | Supplier A |
| PPZ | Phenoxyphosphazene | Supplier B |
| F449 | TSAN; styrene acrylonitrile encapsulated polytetrafluoroethylene (SAN encapsulated PTFE) | SABIC |
| F538 | PETS; Pentaerythritol tetrastearate | Longsha |
| F542 | Antioxidant 1076; Hindered phenol anti-oxidant, CAS: 002082-79-3;Tris(2,4-di-t-butylphenyl)phosphite | BASF |
| F527 | Antioxidant 168; Octadecyl 3-(3,5-di-tert-butyl-4-hydroxyphenyl) propionate | Ciba |
| F722225 | ADR 4468 Joncryl ADR-4468 compatibilizer; styrene-acrylate-epoxy oligomer | BASF |
| F433094 | SFR-100; MQ resin dissolved in dimethylpolysiloxane | Momentive |

In the example compositions, samples were prepared lab extruder (Toshiba TEM-37BS). Glass fiber was introduced via side feeder, all the other resins, additives were preblended and fed via throat feeder. The compounding process condition and downstream molding process for related testing are shown in Tables 2 & 3.

**Table 2. Compounding conditions.**

| Compounder Type | / | TEM-37BS |
|---|---|---|
| Die | mm | 4 |
| Zone 1 Temp | °C | 50 |
| Zone 2 Temp | °C | 100 |
| Zone 3 Temp | °C | 240 |
| Zone 4-8 Temp | °C | 240 |
| Zone 9 Temp | °C | 240 |
| Zone 10-11 Temp | °C | 240 |
| Die Temp | °C | 245 |
| Screw speed | rpm | 300 |
| Throughput | kg/hr | 45 |
| Torque | % | 60-65 |
| Vacuum 1 | MPa | -0.08 |
| Side Feeder 1 | rpm | 250 |
| speed | | |

**Table 3. Molding Conditions**

| | | Mechanical | UL 1.2 mm |
|---|---|---|---|
| Pre-drying time | Hour | 4 | 4 |
| Pre-drying Temp | °C | 100 | 100 |
| Hopper Temp | °C | 50 | 50 |
| Zone 1 Temp | °C | 260 | 260 |
| Zone 2 Temp | °C | 270 | 270 |
| Zone 3 Temp | °C | 285 | 285 |

(continued)

| | | Mechanical | UL 1.2 mm |
|---|---|---|---|
| Nozzle Temp | °C | 275 | 275 |
| Mold Temp | °C | 80 | 80 |
| Holding pressure | bar | 800 | 800 |

Comparative and inventive formulations are presented in Table 4.

**Table 4. HFD-PC formulations.**

| Item Description | Unit | CE1 | CE2 | CE3 | CE4 | CE5 | CE6 | E7 |
|---|---|---|---|---|---|---|---|---|
| ML,7683-111N (HFD low Mw) | % | 17.7 | 17.7 | 16.7 | 16.7 | 15.7 | 15.7 | 17.7 |
| ML7684-111N (HFD high Mw) | % | 15 | 11 | 15 | 11 | 15 | 11 | 14.5 |
| 20% PC/SILOXANE COPOLYMER | % | 8 | 12 | 8 | 12 | 8 | 12 | 8 |
| ML7697 (CFR resin) | % | 10 | 10 | 10 | 10 | 10 | 10 | 10 |
| SAN encapsulated PTFE | % | 0.5 | 0.5 | 0.5 | 0.5 | 0.5 | 0.5 | 0.5 |
| PETS | % | 0.5 | 0.5 | 0.5 | 0.5 | 0.5 | 0.5 | 0.5 |
| Antioxidant AO1076 | % | 0.1 | 0.1 | 0.1 | 0.1 | 0.1 | 0.1 | 0.1 |
| Antioxidant AO168 | % | 0.1 | 0.1 | 0.1 | 0.1 | 0.1 | 0.1 | 0.1 |
| GF | % | 40 | 40 | 40 | 40 | 40 | 40 | 40 |
| Phosphazene | % | 8 | 8 | 9 | 9 | 10 | 10 | 8 |
| SFR100 | % | - | - | - | - | - | - | 0.5 |
| ADR4468 | % | 0.1 | 0.1 | 0.1 | 0.1 | 0.1 | 0.1 | 0.1 |

Applicable testing standards and conditions are presented in Table 5.

**Table 5. Testing conditions and applicable standards.**

| Table 4. Testing condition and standard. | | | |
|---|---|---|---|
| Testing and Condition | Unit | Specimen | Standard |
| Melt Flow Rate (MFR), 300°C/1.2kg | g/10min | Pellet, pre-dried | ASTMD 1238 |
| Izod Impact, notched, 23 °C | J/m | 3.2 mm bar | ASTM D 256 |
| Tensile Modulus, 5 mm/min | MPa | Type I bar | ASTM D 638 |
| Tensile Stress, Type I, 5 mm/min | MPa | Type I bar | ASTM D 638 |
| Tensile Strain, Type I, 5 mm/min | % | Type I bar | ASTM D 638 |
| Flexural Modulus, 1.27 mm/min | MPa | 3.2 mm bar | ASTM D 790 |
| Flexural Stress, 1.27 mm/min | MPa | 3.2 mm bar | ASTM D 790 |
| Heat Deflection Temperature (HDT), 1.82 MPa | °C | 3.2 mm flexural bar | ASTM D 648 |
| FR, normal @ 23 °C/50 % RH for 48 hrs | / | 127 x 12.7 x Thickness | UL 94 V test |
| FR, aging condition at 70 °C for 168 hrs | / | 127 x 12.7 x Thickness | UL 94 V test |

**General Methods**

The melt flow rate ("MFR") was measured at a 260°C/2.16 kilograms force (kgf) load or 265 °C/2.16 kgf load in accordance with ASTM D1238. The MFR is reported in units of grams per 10 minutes (g/10 min).

The notched Izod impact ("NII") test and unnotched Izod impact ("UNII') were carried out on 3.2 mm bars according to ASTM D 256 at 23 °C.

Tensile properties (strength at yield and elongation at break) were measured on Type I bars in accordance with ASTM D638. Tensile modulus at 5 millimeters per minute (mm/min) is reported in units of MPa, tensile strain is reported in %, and tensile strain, is reported in %.

Flexural properties (modulus and strength) were measured using 3.2 mm bars in accordance with ASTM D 790. Flexural strength at yield ("FS") and flexural modulus ("FM") are reported in units of megaPascal (MPa).

The heat deflection temperature ("HDT") was determined using the ASTM D648 standard at 1.82 MPa. The HDT is reported in units of °C.

Flammability resistance ("FR") tests are below.

**Flammability Testing**

Flammability tests were performed following the procedure of Underwriter's Laboratory Bulletin 94 entitled "Tests for Flammability of Plastic Materials, UL94", which is incorporated herein by reference. According to this procedure, the materials were classified as either UL94 V0, UL94 VI, or UL94 V2 on the basis of the test results obtained for five samples. The procedure and criteria for each of these flammability classifications according to UL94 are, briefly, as follows. Multiple specimens (e.g., 5 or 10) were tested per thickness. Some specimens were tested after conditioning for 48 hours at 23°C, 50% relative humidity. The other specimens were tested after conditioning for 168 hours at 70°C. The bar was mounted with the long axis vertical for flammability testing. The specimen was supported such that its lower end was 9.5 mm above the Bunsen burner tube. A blue 19 mm high flame was applied to the center of the lower edge of the specimen for 10 seconds. The time until the flaming of the bar ceases was recorded (t1). If burning ceased, the flame was re-applied for an additional 10 seconds. Again, the time until the flaming of the bar ceased was recorded (t2). If the specimen dripped particles, these were allowed to fall onto a layer of untreated surgical cotton placed 305 mm below the specimen.

V0: In a sample placed so that its long axis is 180 degrees to the flame, the maximum period of flaming and/or smoldering after removing the igniting flame does not exceed 10 seconds and none of the vertically placed samples produces drips of burning particles that ignite absorbent cotton, and no specimen burns up to the holding clamp after flame or after glow.

The data were also analyzed by calculating the average flame out time, standard deviation of the flame out time and the total number of drips, and by using statistical methods to convert that data to a prediction of the probability of first time pass, or "p(FTP)", that a particular sample formulation would achieve a "pass" rating in the conventional UL94 V0 or V1 testing of 5 bars. The probability of a first time pass on a first submission (pFTP) was determined according to the formula:

$$p(FTP)\text{—} (P_{t1>mbt,\ n=0} \times P_{t2>mbt,\ n=0} \times P_{total<=mtbt} \times P_{drip,\ n=0}),$$

where $P_{t1>mbt,\ n=0}$ is the probability that no first burn time exceeds a maximum burn time value, $P_{t2>mbt,\ n=0}$ is the probability that no second burn time exceeds a maximum burn time value, $P_{total<=mtbt}$ is the probability that the sum of the burn times is less than or equal to a maximum total burn time value, and $P_{drip,\ n=0}$ is the probability that no specimen exhibits dripping during the flame test. First and second burn time refer to burn times after a first and second application of the flame, respectively.

The probability that no first burn time exceeds a maximum burn time value, $P_{t1>mbt,\ n=0}$, was determined the formula:

$$P_{t1>mbt,\ n=0} = (1 - P_{t1>mbt})^5,$$

where $P_{t1>mbt}$ is the area under the log normal distribution curve for t1 > mbt, and where the exponent "5" relates to the number of bars tested. The probability that no second burn time exceeds a maximum burn time value may be determined from the formula:

$$P_{t2>mbt,\ n=0} = (1 - P_{t2>mbt}),$$

where $P_{t2>mbt}$ is the area under the normal distribution curve for t2 > mbt. As above, the mean and standard deviation of the burn time data set were used to calculate the normal distribution curve. For the UL-94 V0 rating, the maximum

burn time was 10 seconds. For a V1 or V2 rating the maximum burn time was 30 seconds. The probability $P_{drip,\ n=0}$ that no specimen exhibits dripping during the flame test was an attribute function, estimated by:

$$P_{drip,\ n=0} = (1 - P_{drip})^5,$$

where $P_{drip}$ = (the number of bars that drip/the number of bars tested).

The probability $P_{total<=mtbt}$ that the sum of the burn times was less than or equal to a maximum total burn time value may be determined from a normal distribution curve of simulated 5-bar total burn times. The distribution may be generated from a Monte Carlo simulation of 1000 sets of five bars using the distribution for the burn time data determined above. Techniques for Monte Carlo simulation are well known in the art. A normal distribution curve for 5-bar total burn times may be generated using the mean and standard deviation of the simulated 1000 sets. Therefore, $P_{total<=mtbt}$ may be determined from the area under a log normal distribution curve of a set of 1000 Monte Carlo simulated 5-bar total burn time for total ≤ maximum total burn time. For the UL-94 V0 rating, the maximum total burn time was 50 seconds. For a VI or V2 rating, the maximum total burn time was 250 seconds.

FOT2 is the average flame time t2 of 10 bars.

Results are presented in Table 6.

**Table 6. Mechanical and FR Results for HFD-PC compositions**

| Item Description | Unit | CE1 | CE2 | CE3 | CE4 | CE5 | CE6 | E7 |
|---|---|---|---|---|---|---|---|---|
| ML7683-111N(HFD low Mw) | % | 17.7 | 17.7 | 16.7 | 16.7 | 15.7 | 15.7 | 17.7 |
| ML7684-111N (HFD high Mw) | % | 15 | 11 | 15 | 11 | 15 | 11 | 14.5 |
| 20% PC/SILOXANE COPOLYMER | % | 8 | 12 | 8 | 12 | 8 | 12 | 8 |
| ML7697 (CFR resin) | % | 10 | 10 | 10 | 10 | 10 | 10 | 10 |
| SAN encapsulated PTFE | % | 0.5 | 0.5 | 0.5 | 0.5 | 0.5 | 0.5 | 0.5 |
| PETS | % | 0.5 | 0.5 | 0.5 | 0.5 | 0.5 | 0.5 | 0.5 |
| AO1076 | % | 0.1 | 0.1 | 0.1 | 0.1 | 0.1 | 0.1 | 0.1 |
| AO168 | % | 0.1 | 0.1 | 0.1 | 0.1 | 0.1 | 0.1 | 0.1 |
| Nittobo, flat fiber | % | 40 | 40 | 40 | 40 | 40 | 40 | 40 |
| Phosphazene | % | 8 | 8 | 9 | 9 | 10 | 10 | 8 |
| SFR100 | % | | | | | | | 0.5 |
| ADR4468 | % | 0.1 | 0.1 | 0.1 | 0.1 | 0.1 | 0.1 | 0.1 |
| **Test Description** | **Unit** | | | | | | | |
| MFR 300 °C/1.20 KG | gila. mim | 15.5 | 16.7 | 17.7 | 16.8 | 19.5 | 20.4 | 17.8 |
| NII 23 °C, 5 lbf/ft | J/m | 147 | 161 | 151 | 163 | 149 | 159 | 154 |
| HDT 1.82 MPa, 3.2 mm | °C | 96 | 96.3 | 94.5 | 93.4 | 92 | 91.4 | 95.8 |
| TM 5 mm/min | MPa | 12400 | 12395 | 12685 | 12450 | 12477 | 12544 | 12450 |
| TS 5 mm/min @ break | MPa | 147.5 | 146.8 | 151.3 | 148.8 | 150.9 | 150.7 | 143.1 |
| TE 5 mm/min @ break | % | 2.1 | 2.1 | 2.2 | 2.2 | 2.2 | 2.2 | 2 |
| V0-12 mm, normal | | 0.02 | 0.05 | 0.27 | 0 | 0.31 | 0 | 0.85 |
| FOT (5 bars) | s | 57.2 | 58.1 | 46.5 | 66.6 | 46.8 | 71.7 | 31 |
| VO-1.2 mm, aging | | 0.99 | 0.98 | 0.31 | 0.67 | 0.71 | 0.13 | 1 |
| FOT (5 bars) | s | 29.7 | 37.4 | 48.2 | 41.6 | 39.1 | 47.6 | 34.4 |

The examples demonstrate the effect of the siloxane additive on phenoxyphosphazene flame retardant and glass fiber filled HFD-PC. For 40% GF filled HFD-PC composites, by comparing E7 and C1, it was apparent that presence of 0.5% siloxane additive reduced FOT by half of the FOT time for normal condition FR testing.

Comparative samples CE1 through CE6 were different attempts to improve FR performance from C1 by increasing the FR additive or increasing the PC-polysiloxane copolymer. Here however, only UL94 normal flame condition FOT were slightly reduced. In contrast, UL94 aging flame condition FOT were increased, which indicates a reduction in flame retardant performance, (means worse FR performance). Thus, surprisingly increasing phenoxyphosphazene FR additive and PC-polysiloxane copolymer content did not boost FR performance in HFD PC composition system, while

the introduction of the siloxane component did.

**Definitions**

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate polymer" includes mixtures of two or more polycarbonate polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additive materials" means that the additive materials may or may not be included and that the description includes compositions that both include and that do not include the additive materials.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and

are present in such ratio regardless of whether additional components are contained in the compound.

As used herein the terms "weight percent," "wt%," and "wt. %," which can be used interchangeably, indicate the percent by weight of a given component based on the total weight of the composition, unless otherwise specified. That is, unless otherwise specified, all wt. % values are based on the total weight of the composition. It should be understood that the sum of wt. % values for all components in a disclosed composition or formulation are equal to 100.

Certain abbreviations are defined as follows: "g" is grams, "kg" is kilograms, "°C" is degrees Celsius, "min" is minutes, "mm" is millimeter, "mPa" is megapascal, "WiFi" is a system of accessing the internet from remote machines, "GPS" is Global Positioning System - a global system of U.S. navigational satellites which provide positional and velocity data. "LED" is light-emitting diode, "RF" is radio frequency, and "RFID" is radio frequency identification.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

**1.** A composition comprising:

a. from about 26 wt. % to about 89 wt. % of a polycarbonate polymer component;
b. from about 0.5 wt. % to about 20 wt. % of phosphazene-based flame retardant;
c. from about 0.01 wt. % to about 4 wt. % of a siloxane component; and
d. from about 10 wt. % to about 50 wt. % of a filler component,

wherein the composition exhibits a notched Izod impact strength of at least 150 J/m when tested in accordance with ASTM D256 at 23 °C and 51b/ft on a 3.2 mm bar specimen,

wherein the composition exhibits a tensile elongation less than or equal to 2% when tested in accordance with D638 at 5 mm/min at break on a Type I bar specimen,

wherein the composition achieves a p(FTP) of at least 0.85 for normal $V_0$ of at 1.2 mm according to UL 94 (2019), and

wherein all weight percent are based on the total weight of the composition.

**2.** The composition of claim 1, wherein a molded part comprising the composition exhibits less variation in surface

appearance by visual inspection than a comparative reference composition that does not include the siloxane component.

3. The composition according to any one of claims 1-2, wherein the phosphazene-based flame retardant comprises a phenoxyphosphazene.

4. The composition according to any one of claims 1-3, wherein the polycarbonate polymer component comprises a polycarbonate copolymer including repeating units derived from Bisphenol-A and repeating units derived from sebacic acid, a Bisphenol-A polycarbonate homopolymer, a polycarbonate polysiloxane copolymer, or a combination thereof.

5. The composition according to any one of claims 1 to 4, wherein the polycarbonate polymer component comprises a polycarbonate polysiloxane copolymer.

6. The composition according to any one of claims 1 to 4, wherein the polycarbonate polymer component comprises a polycarbonate polysiloxane copolymer present in an amount from about 5 wt. % to about 30 wt. % based on the total weight of the composition.

7. The composition according to any one of claims 1 to 6, wherein the filler component comprises a glass fiber, glass spheres, or a combination thereof.

8. The composition according to any one of claims 1 to 6, wherein the filler component comprises glass fiber.

9. The composition according to any one of claims 1-8, wherein the siloxane component comprises at least one oligomeric siloxane additive.

10. The composition according to any one of claims 1-8, wherein the siloxane component comprises at least one MQ silicone resin.

11. The composition according to any one of claims 1-8, wherein the siloxane component comprises an MQ silicone resin and dimethyl siloxane.

12. A composition comprising:

a. from about 20 wt. % to about 80 wt. % of a polycarbonate polymer component;
b. from about 0.5 wt. % to about 30 wt. % of phosphazene-based flame retardant;
c. from about 0.01 wt. % to about 8 wt. % of an siloxane component; and
d. from about 10 wt. % to about 50 wt. % of a filler component,
wherein the composition exhibits high modulus, thin wall FR, and high impact properties, and
wherein all weight percent are based on the total weight of the composition.

13. An article formed from the composition of any of claims 1-12.

14. A method for forming a composition, the method comprising:

a. forming a mixture comprising

i. from about 20 wt. % to about 80 wt. % of a polycarbonate polymer,

1) from about 20 wt. % to about 80 wt. % of a polycarbonate polymer component,
2) from about 0.5 wt. % to about 30 wt. % of phosphazene-based flame retardant,
3) from about 0.01 wt. % to about 5 wt. % of a siloxane component, and
4) from about 10 wt. % to about 50 wt. % of a filler; and

b. injection molding or extruding the mixture to form the composition,

wherein the composition exhibits a notched Izod impact strength of at least 150 J/m when tested in accordance with ASTM D256 at 23 °C and 51b/ft on a 3.2 mm bar specimen,

wherein the composition exhibits a tensile elongation less than or equal to 2% when tested in accordance with D638 at 5 mm/min at break on a Type I bar specimen, and
wherein the composition achieves a p(FTP) of at least 0.85 for normal V0 of at 1.2 mm according to UL 94 (2019).

**15.** The method according to claim 14, wherein the filler component comprises glass fiber.

Europäisches Patentamt
European Patent Office
Office européen des brevets

# EUROPEAN SEARCH REPORT

Application Number
EP 20 18 2663

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/022676 A1 (SABIC INNOVATIVE PLASTICS IP [NL]) 19 February 2015 (2015-02-19) * paragraphs [0019], [0070], [0074], [0076] - [0083], [0085]; example 8; tables 1,4 * ----- | 1-15 | INV. C08L69/00 C08K5/5399 C08K5/541 C08K3/013 |
| X | WO 2020/118478 A1 (COVESTRO DEUTSCHLAND AG [DE]; HUANG ZHENYU [CN]) 18 June 2020 (2020-06-18) * page 32, line 4 - page 35, line 21; claims 1,4,5,6,7,10; examples 1-5; table 3 * ----- | 1-15 | |
| X | EP 1 548 065 A1 (SUMITOMO DOW LTD [JP]) 29 June 2005 (2005-06-29) * paragraphs [0060] - [0063]; example 4; table 3 * ----- | 1-15 | |
| X | EP 3 511 375 A1 (MITSUBISHI ENG PLASTICS CORP [JP]) 17 July 2019 (2019-07-17) * paragraphs [0224], [0225]; claims 1,7; examples 1-27; tables 1,2,3,4 * ----- | 1-15 | TECHNICAL FIELDS SEARCHED (IPC) C08L C08K |

The present search report has been drawn up for all claims

1

| Place of search | Date of completion of the search | Examiner |
|---|---|---|
| The Hague | 13 November 2020 | Malik, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT ON EUROPEAN PATENT APPLICATION NO.** EP 20 18 2663

This annex lists the patent family members relating to the patent documents cited in the above-mentioned European search report. The members are as contained in the European Patent Office EDP file on The European Patent Office is in no way liable for these particulars which are merely given for the purpose of information.

13-11-2020

| Patent document cited in search report | Publication date | Patent family member(s) | Publication date |
|---|---|---|---|
| WO 2015022676 A1 | 19-02-2015 | CN 105452378 A | 30-03-2016 |
| | | EP 3033393 A1 | 22-06-2016 |
| | | KR 20160044436 A | 25-04-2016 |
| | | US 2016194495 A1 | 07-07-2016 |
| | | WO 2015022676 A1 | 19-02-2015 |
| WO 2020118478 A1 | 18-06-2020 | NONE | |
| EP 1548065 A1 | 29-06-2005 | CN 1675305 A | 28-09-2005 |
| | | EP 1548065 A1 | 29-06-2005 |
| | | JP 4225459 B2 | 18-02-2009 |
| | | JP 2004067881 A | 04-03-2004 |
| | | KR 20050032098 A | 06-04-2005 |
| | | MX PA05001472 A | 06-06-2005 |
| | | US 2005245670 A1 | 03-11-2005 |
| | | WO 2004016690 A1 | 26-02-2004 |
| EP 3511375 A1 | 17-07-2019 | CN 109689784 A | 26-04-2019 |
| | | EP 3511375 A1 | 17-07-2019 |
| | | US 2020291226 A1 | 17-09-2020 |
| | | WO 2018047693 A1 | 15-03-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS,* 80-05-7
- *CHEMICAL ABSTRACTS,* 002082-79-3